# EUROPEAN PATENT APPLICATION

(11) **EP 2 098 724 A2**
(43) Date of publication of application: **09.09.2009**
(21) Application number: 09154418.9
(22) Date of filing: 05.03.2009
(51) Int. Cl.: F03D 3/06

(54) **An apparatus for capturing kinetic energy from a fluid and for converting it into mechanical energy**

(30) Priority: 05.03.2008 IT PV20080004
(71) Applicant: Bellintani, Silvano, 27029 Vigevano (PV) (IT)
(72) Inventor: Bellintani, Silvano, 27029 Vigevano (PV) (IT)
(74) Representative: Robba, Pierpaolo

(57) **Abstract**

The present invention, pertaining to the field of the renewable energies and, precisely, to the wind and water field of the renewable energies, refers to an apparatus (1) for exploiting the energy of a moving fluid and, precisely, the wind and water energy converting it into mechanical energy that, in its turn, can be used for generating electric energy, said apparatus (1) comprising a swivelling carousel (2) and a rotating support (3), said swivelling carousel (2) comprising, in its turn, at least four frames (4), preferably square-shaped and preferably cross-fastened to said rotating support (3), each of said frames (4) comprising a corresponding sail (8), made of a light, flexible and soft material and hinged to the corresponding frame (4) at hinges (10), thanks to the provision of which each sail (8) is orientable in any direction.

## Description

### Technical Field

The present invention pertains to the field of the renewable energies and, precisely, to the wind and water field of the renewable energies.

The present invention refers to an apparatus for exploiting the energy of a moving fluid and, precisely, the wind and water energy.

More precisely, the present invention refers to an apparatus for capturing kinetic energy from a moving fluid and, precisely, from wind and water and converting it into mechanical energy.

Even more precisely, the present invention refers to an apparatus for capturing kinetic energy from a moving fluid and, precisely, from wind and water and converting it into mechanical energy that, in its turn, can be used for generating renewable and non-polluting electric energy, or for any other application deemed to be convenient.

### Known Art

The use of the wind and water energy has a pluri-millennial history; the apparatus according to the present invention is a contribution to the improvement of the existing technology.

In particular, some solutions of the existing technology show functioning drawbacks resulting from the variability of the direction and/or of the speed of the wind.

Moreover, in particular, other solutions of the existing technology suitable for operating in rivers or sea streams are disadvantageous in terms of high construction and operation costs. Moreover, in particular, some solutions of the existing technology are unable to produce mechanical energy at low rates of flow.

Finally, in particular, some solutions of the existing technology employ paddle apparatuses made of heavy and wear material, generally made of wood, that, besides offering a poor yield, produce a remarkable acoustic impact.

Therefore, the need is felt for an apparatus that works in an optimal way independently from the direction and/or from the speed of the wind.

Moreover, the need is felt for an apparatus suitable for operating in rivers or sea streams and having limited construction and operation costs.

Moreover, the need is felt for an apparatus technology able to produce mechanical energy at low rates of flow.

Finally, the need is felt for an apparatus with low acoustic impact.

### Disclosure of the Invention

The object of the present invention is to overcome the drawbacks of the existing technical solutions, meeting the needs still unsatisfied.

Such object is achieved with the vertical axis apparatus provided with a flapping flexible sail swivelling system according to the invention that, advantageously, thanks to its light, flexible and soft sails, allows an optimal functioning independently from the direction and/or from the speed of the wind.

Moreover, advantageously, the aforesaid apparatus according to the invention, thanks to its light, flexible and soft sails, is suitable for operating in rivers or sea streams and has limited construction and operation costs.

Moreover, advantageously, the aforesaid apparatus according to the invention, thanks to its light, flexible and soft sails, is able to produce mechanical energy at low rates of flow.

Finally, advantageously, the aforesaid apparatus according to the invention, thanks to its light, flexible and soft sails, has a low acoustic impact.

### Brief Description of the Drawings

The following figures, given by way of non-limiting example, help to show the present invention, a preferred embodiment of which will be disclosed in detail later on:
- FIG. 1 shows a front view of the apparatus according to the invention;
- FIG. 2 shows a top plan view of the apparatus of FIG. 1;
- FIG. 3 shows a first detail of the apparatus of FIG. 1 in an enlarged view;
- FIG. 4 shows a second detail of the apparatus of FIG. 1 in an enlarged view.

### Description of a Preferred Embodiment

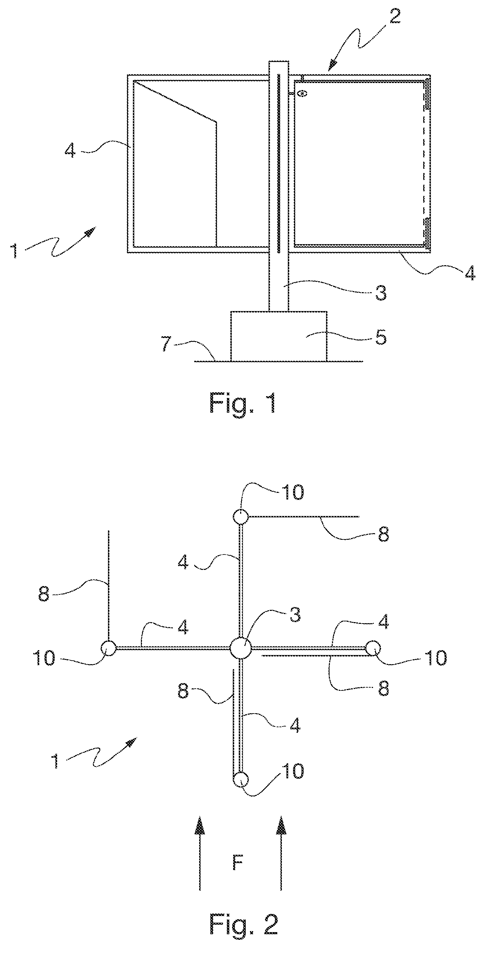

With reference to FIG. 1, the apparatus 1 comprises a swivelling carousel 2 and a rotating support 3 preferably having a cylindrical shape.

Said swivelling carousel 2 comprises, in its turn, at least four frames 4, preferably square-shaped, preferably cross-fastened to said rotating support 3.

Each of said frames 4 essentially consists of a stiff framework developing along all the perimeter of each of said frames 4.

Said swivelling carousel 2 is made of a material suitable for supporting the involved forces, for instance is made of metal material, for instance aluminium or steel, preferably stainless steel.

Said rotating support 3 is preferably made of steel and mounted onto bearings (not shown); said rotating support 3 preferably consists of a steel cylindrical tube.

The apparatus 1 has low rotation speeds and it is connected to a current generator 5 comprising a rotor (not shown).

The apparatus 1 can be anchored, by means of a flange 7, to any support element able to allow the foreseen use in accordance with the chosen application to said apparatus 1.

FIG. 2 shows that each of said frames 4 further comprises a sail 8, each of said at least four sails 8 being hinged to the corresponding frame 4 at hinges 10 located at the opposite end with respect to the end connected to the rotating support 3, that is at the external end of said frame 4.

In particular, each of said at least four sails 8 is fastened to the side of each corresponding frame 4 opposite to the side connected to the rotating support 3, that is to the external side of said frame 4, with the possibility to rotate for being able to be automatically placed in the ideal position both for receiving the wind or water push and for avoiding said push, so as to be able to make a turn with the most possible effectiveness.

Said hinges 10 can be positioned so as to turn either clockwise or anticlockwise.

Sails 8, thanks to the connection system through said hinges 10, are orientable in any direction and, in particular, they can be displaced from a first position parallel to frames 4 and perpendicular to the direction of a flow F to a second position perpendicular to frames 4 and parallel to the direction of a flow F.

Said sails 8 are made of a light, flexible and soft material such as, for instance, carbon fibre; other natural or synthetic materials, having convenient properties of lightness, flexibility and softness can be selected depending on the specific application.

The sail 8 lightness allows to reduce to a minimum the amounts of the involved forces as well as the respective reactions at hinges 10 and at the whole structure; the sail 8 flexibility allows it to fit in the best possible way to the flow turbulences present with respect to its movement and to hinges 10 to which the sail is connected; the sail 8 softness is necessary to reduce to a minimum the effects of the impacts to which the sail is subjected during the rotor functioning and, therefore, also the produced noise.

When the apparatus 1 is subjected to a flow of air or water, or in case of another fluid, F having a direction perpendicular to the rotation axis of said apparatus 1, the latter is able to convert the kinetic energy of said flow into mechanical energy, thanks to the rotation of the rotor of the generator 5 produced by pushing said sails 8.

Said sails 8 are fastened to said frames 4 so as to allow to effectively exploit flow F whatever its origin direction may be, since apparatus 1 does not have axes that are parallel to the rotation plane.

The effectiveness of apparatus 1, therefore, depends on the ability of the orientable sails 8 both to easily position themselves in a direction parallel to flow F when they are in the semicircle of the rotor moving in a direction opposite to the flow F itself, thus offering the minimum resistance, and to adhere to frame 4 onto which said sails are fastened when they move in the semicircle of the rotor moving in the same direction of the flow F, thus offering the maximum resistance.

FIG. 2 shows two of said sails 8 oriented in a direction parallel to flow F and two of said sails 8 oriented in a direction perpendicular to flow F; more precisely, FIG. 2 clearly shows that the two pushing sails are positioned perpendicularly to flow F, while the two returning sails are positioned longitudinally to flow F.

The sail receiving the push covers flow F, reducing its influence on the rotation of the preceding sail that could thus efficiently orientate itself with respect to the discharging direction parallel to flow F, thanks to the centrifugal force to which the rotor is subjected and to the push given by the increase of the sail appearing at the flow opposite to the return movement.

FIG. 2 also schematically illustrates the positioning of sails 8 during the flow F action and shows the rotation direction of apparatus 1 given the positioning of the sails on the frame; obviously, it is possible to invert the rotation direction of apparatus 1 by simply changing the positioning of the sails on frames 4.

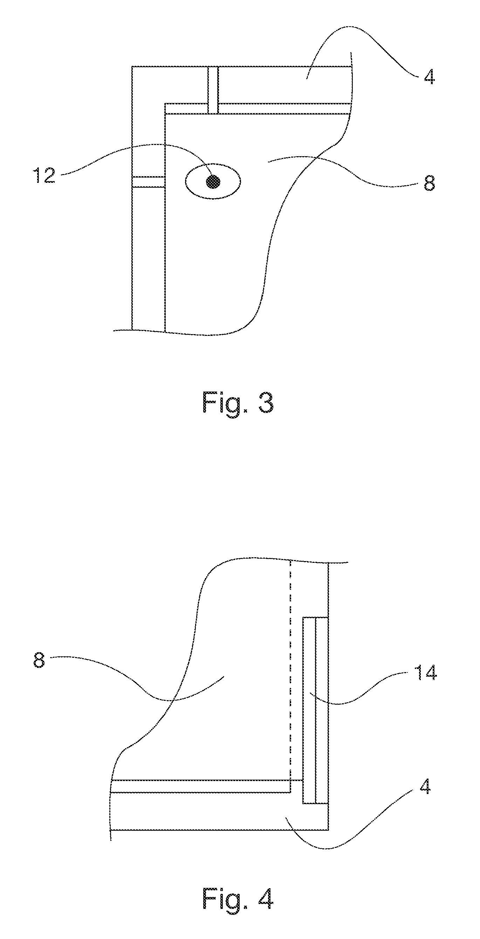

In FIG. 3 is schematically illustrated the type of lock 12 that allows to block sail 8 during the path in which it has been subjected to the wind or water push, and that releases said sail immediately thereafter; it is evident that any other type of lock suitable for the purpose, selected among those known to the person skilled in the art, can be employed.

Said locks 12 must be characterised by a high elasticity in order to cushion the impact of sails 8 on frames 4, thus improving the apparatus soundproofing.

In FIG. 4 is schematically illustrated the type of fastening sails 8 through bearings 14, which allow the sails to easily rotate on the fastening itself; it is evident that any other type of fastening suitable for the purpose, selected among those known to the person skilled in the art, can be employed.

The advantages of the present invention are mainly due to the choice of the material used for making the sails, which must be light, flexible and soft.

In particular, the present invention overcomes the limits of the paddle apparatuses currently available, in which the paddles are made of heavy and wear material, generally made of wood; such kind of apparatuses, besides offering a poor yield, produces a remarkable acoustic impact, thus making them inappropriate for a large-scale intensive use.

From the description disclosed above in detail, the advantages of the apparatus according to the present invention will become evident; in particular:
- the great constructive and operative easiness, which represents the major asset of the apparatus according to the invention;
- the high effectiveness;
- the achievement of yield standards of an excellent level;
- the extraordinary setting-up cost-performance;
- a practically null enviromental, in particular acoustic, impact.

It is evident that the apparatus according to the present invention, herein described through a preferred embodiment given by way of non limiting example, can be subjected to many modifications and variants, all being part of the inventive concept that characterises the invention, and it can also be improved in ways known to the person skilled in the art, without departing from the scope of the present invention.

## Claims

1. An apparatus (1) for exploiting the energy of a moving fluid (F) comprising a swivelling carousel (2) and a rotating support (3), said swivelling carousel (2) comprising at least four frames (4) fastened to said rotating support (3), said apparatus (1) being **characterised in that** each of said frames (4) comprises a corresponding sail (8), each of said sails (8) being hinged to the corresponding frame (4) at hinges (10) located at the opposite end with respect to the end connected to the rotating support (3), that is at the external end of said frame (4), this making said sails (8) orientable in any direction.

2. An apparatus (1) according to claim 1, wherein said fluid (F) is wind or water.

3. An apparatus (1) according to claim 1 or 2, wherein said sails (8) are made of a light, flexible and soft material.

4. An apparatus (1) according to any of the preceding claims, wherein said hinges (10) can be positioned so as to turn either clockwise or anticlockwise.

5. An apparatus (1) according to any of the preceding claims, wherein said at least four frames (4) are square-shaped and cross-fastened to said rotating support (3).

6. An apparatus (1) according to any of the preceding claims, wherein each of said sails (8) comprises a corresponding lock (12) having high elasticity.

7. An apparatus (1) according to any of the preceding claims, wherein each of said sails (8) comprises corresponding bearings (14) allowing the rotation thereof.

8. An apparatus (1) according to any of the preceding claims, wherein said apparatus (1) is connected to a current generator (5).

9. An apparatus (1) according to any of the preceding claims, wherein said apparatus (1) can be anchored, by means of a flange (7), to a support element.

10. Use of an apparatus (1) according to any of the preceding claims for capturing kinetic energy from a moving fluid and, precisely, from wind and water and converting it into mechanical energy that, in its turn, can be used for generating renewable and non-polluting electric energy, or for a different application.
